# EUROPÄISCHE PATENTSCHRIFT

(11) **EP 0 960 140 B1**
(45) Veröffentlichungstag und Bekanntmachung des Hinweises auf die Patenterteilung: **08.05.2002**
(21) Anmeldenummer: 98906913.3
(22) Anmeldetag: 04.02.1998
(51) Int. Cl.: C08F 8/00, C08G 73/02

(54) **VERFAHREN ZUR HERSTELLUNG VON CARBAMATEINHEITEN ENTHALTENDEN POLYMERISATEN UND IHRE VERWENDUNG**
METHOD FOR PRODUCING POLYMERS CONTAINING CARBAMATE UNITS AND THE USE THEREOF
PROCEDE DE PREPARATION DE POLYMERISATS CONTENANT DES UNITES CARBAMATE ET UTILISATION DESDITS POLYMERISATS

(30) Priorität: 17.02.1997 DE 19705992
(43) Veröffentlichungstag der Anmeldung: 01.12.1999
(73) Patentinhaber: BASF AKTIENGESELLSCHAFT, 67056 Ludwigshafen (DE)
(72) Erfinder: UTECHT, Jens, D-68809 Neulussheim (DE); NIESSNER, Manfred, D-67105 Schifferstadt (DE); WEIGUNY, Sabine, D-67251 Freinsheim (DE); LORENCAK, Primoz, D-67069 Ludwigshafen (DE); STAMM, Armin, D-55128 Mainz (DE)
(86) Internationale Anmeldenummer: EP9800594
(87) Internationale Veröffentlichungsnummer: WO9835999

(56) Entgegenhaltungen:
- EP-A- 0 580 079
- DE-A- 4 413 720
- DE-C- 610 898
- US-A- 3 715 336
- US-A- 5 324 792
- PATENT ABSTRACTS OF JAPAN vol. 095, no. 002, 31.März 1995 & JP 06 322019 A (MITSUBISHI KASEI CORP.), 22.November 1994,

## Beschreibung

Die Erfindung betrifft ein Verfahren zur Herstellung von Carbamiateinheiten enthaltenden Polymerisaten und ihre Verwendung als Retentions-, Entwässerungs- und Flockungsmittel sowie als Fixiermittel bei der Herstellung von Papier, als Schutzkolloid für die Herstellung von wäßrigen Alkyldiketendispersionen und als Dispergiermittel für die Herstellung von wäßrigen Füllstoffanschlämmungen.

Vinylamineinheiten enthaltende Polymerisate werden bekanntlich durch Polymerisieren von acyclischen N-Vinylcarbonsäureamiden, vorzugsweise N-Vinylformamid, und anschließende Hydrolyse der Polymeren durch Einwirkung von Säuren oder Basen hergestellt, vgl. US-A-4 421 602, US-A-3 597 314, US-A-4 578 515 und US-A-4 255 548. Polyvinylformamide, die 10 bis 90 % Vinylamineinheiten enthalten, werden beispielsweise gemäß der Lehre der US-A-4 421 602 als Retentions-, Flockungs- und Entwässerungsmittel bei der Herstellung von Papier und als Flockungsmittel für Schlämme verwendet.

Aus der EP-B-0 216 387 ist die Verwendung von hydrolysierten Copolymerisaten aus N-Vinylformamid und Vinylacetat, Vinylpropionat, C₁- bis C₄-Alkylvinylethern, der Ester, Nitrile und Amide von Acrylsäure und Methacrylsäure sowie von N-Vinylpyrrolidon bei der Herstellung von Papier als Mittel zur Erhöhung der Trockenfestigkeit des Papiers bekannt. Die in die Copolymerisate eingebauten Comonomeren wie Vinylester, Ester der Acrylsäure und Methacrylsäure sowie die Nitrile und Amide dieser Carbonsäuren können gegebenenfalls ebenfalls in hydrolysierter Form vorliegen. Bevorzugte Trockenfestigkeitsmittel sind Copolymerisate aus N-Vinylformamid und Vinylacetat, deren Monomereinheiten zu jeweils 30 bis 100 mol-% hydrolysiert sind.

Aus der EP-B-0 251 182 sind Copolymerisate bekannt, die N-Vinylformamid-, Vinylamin- und Acrylnitrileinheiten sowie gegebenenfalls geringe Anteile an Acrylamid- und Acrylsäureeinheiten enthalten. Auch diese Polymerisate sind dadurch erhältlich, daß man N-Vinylformamid mit Acrylnitril copolymerisiert und die Copolymerisate durch Einwirkung von Säuren oder Basen hydrolysiert.

Auch die Herstellung modifizierter Polyvinylamine ist aus der Literatur bekannt. So wird beispielsweise in Macromol. Chem. Phys., Band 195, 679 (1994) die Umsetzung von Polyvinylamin mit aliphatischen Carbonsäurechloriden beschrieben. Aus der US-A-4 403 072 und der US-A-4 275 002 ist die Reaktion von Vinylamineinheiten enthaltenden Polymerisaten mit aromatischen Sulfonsäurechloriden zu den entsprechenden Sulfonamiden bekannt. Die Umsetzungen werden generell in nicht wäßrigen, polaren Lösemitteln durchgeführt. Hierzu ist es notwendig, die in wäßriger Lösung synthetisierten Polymeren zunächst in aufwendiger Weise zu isolieren.

Die Umsetzung von niedrig molekularen Aminen mit Halogenameisensäureestern wird in Houben-Weyl, Methoden der organischen Chemie, Georg-Thieme-Verlag Stuttgart, Band E4, 149 ff (1983) beschrieben.

Polyethylenimine sind ebenfalls bekannte Stoffe. Sie werden beispielsweise durch Polymerisieren von Ethylenimin in wäßrigem Medium in Gegenwart geringer Mengen an Säuren oder Säurespendern hergestellt, vgl. DE-B-1 495 494.

Aus der US-A-3 715 336 sind Vinylamineinheiten und Vinylalkoholeinheiten enthaltende Copolymerisate bekannt, die durch Polymerisieren von Vinylisocyanat und Vinylacetat, Umsetzung der Copolymerisate mit einem C₁- bis C₄-Alkohol unter Bildung von Carbamateinheiten und partielle oder vollständige Hydrolyse der Carbamateinheiten zu Vinylamineinheiten erhältlich sind. Die Copolymerisate werden beispielsweise als Flockungsmittel für wäßrige Suspensionen von feinteiligen anorganischen Materialien und Dispersionen von organischen Stoffen in Wasser verwendet.

Der vorliegenden Erfindung liegt die Aufgabe zugrunde, ein technisch einfach durchzuführendes Verfahren zur Herstellung von Carbamateinheiten enthaltenden Polymerisaten zur Verfügung zu stellen.

Die Aufgabe wird erfindungsgemäß gelöst mit einem Verfahren zur Herstellung von Carbamateinheiten enthaltenden Polymerisaten, wenn man Polyethylenimine oder Polymerisate, die Vinylamineinheiten der Formel 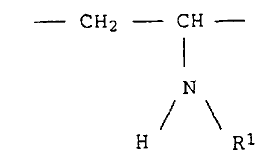 enthalten, in der R¹ = H oder C₁- bis C₆-Alkyl bedeutet, mit Halogenameisensäureestern umsetzt.

Die so erhältlichen Carbamatgruppen enthaltenden Polyethylenimine oder Vinylcarbamateinheiten enthaltenden Polymerisate werden als Retentions-, Entwässerungs- und Flockungsmittel sowie als Fixiermittel bei der Herstellung von Papier, als Schutzkolloid für die Herstellung von wäßrigen Alkyldiketendispersionen und als Dispergiermittel für die Herstellung von wäßrigen Füllstoffanschlämmungen verwendet.

Polyethylenimine sind bekannt. Ein Verfahren zu ihrer Herstellung wurde oben zum Stand der Technik bereits genannt. Bei dem erfindungsgemäßen Verfahren kann man praktisch sämtliche Polyethylenimine einsetzen, bevorzugt sind jedoch die wasserlöslichen Polyethylenimine, die beispielsweise Molmassen von 200 bis 2 Millionen, vorzugsweise von 200 bis 500000 haben. Besonders bevorzugt werden Polyethylenimine mit Molmassen von 500 bis 100000 eingesetzt.

Vinylamineinheiten enthaltende Polymerisate sind ebenfalls bekannt. Literaturstellen, in denen geeignete Polymerisate dieser Art beschrieben werden, sind bereits zum Stand der Technik genannt worden.

Um die Vinylamineinheiten enthaltenden Polymerisate herzustellen, geht man beispielsweise von offenkettigen N-Vinylcarbonsäureamiden der Formel 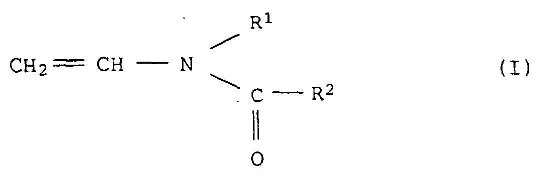 aus, in der R¹ und R² gleich oder verschieden sein können und für Wasserstoff und C₁- bis C₆-Alkyl stehen. Geeignete Monomere sind beispielsweise N-Vinylformamid (R¹=R²=H in Formel I) N-Vinyl-N-methylformamid, N-Vinylacetamid, N-Vinyl-N-methylacetamid, N-Vinyl-N-ethylacetamid, N-Vinyl-N-methylpropionamid und N-Vinylpropionamid. Zur Herstellung der Polymerisate können die genannten Monomeren entweder allein, in Mischung untereinander oder zusammen mit anderen monoethylenisch ungesättigten Monomeren polymerisiert werden. Vorzugsweise geht man von Homo- oder Copolymerisaten des N-Vinylformamids aus.

Als monoethylenisch ungesättigte Monomere, die mit den N-Vinylcarbonsäureamiden copolymerisiert werden, kommen alle damit copolymerisierbaren Verbindungen in Betracht. Beispiele hierfür sind Vinylester von gesättigten Carbonsäuren von 1 bis 6 Kohlenstoffatomen wie Vinylformiat, Vinylacetat, Vinylpropionat und Vinylbutyrat. Weitere geeignete Comonomere sind ethylenisch ungesättigte C₃- bis C₆-Carbonsäuren, beispielsweise Acrylsäure, Methacrylsäure, Maleinsäure, Crotonsäure, Itakonsäure und Vinylessigsäure sowie deren Alkalimetall- und Erdalkalimetallsalze, Ester, Amide und Nitrile der genannten Carbonsäuren, beispielsweise Methylacrylat, Methylmethacrylat, Ethylacrylat und Ethylmethacrylat. Weitere geeignete Carbonsäureester leiten sich von Glykolen oder bzw. Polyalkylenglykolen ab, wobei jeweils nur eine OH-Gruppe verestert ist, z.B. Hydroxyethylacrylat, Hydroxyethylmethacrylat, Hydroxypropylacrylat, Hydroxybutylacrylat, Hydroxypropylmethacrylat, Hydroxybutylmethacrylat sowie Diacrylsäuremonoester von Polyalkylenglykolen einer Molmasse von 500 bis 10000. Weitere geeignete Comonomere sind Ester von ethylenisch ungesättigten Carbonsäuren mit Aminoalkoholen wie beispielsweise Dimethylaminoethylacrylat, Dimethylaminoethylmethacrylat, Diethylaminoethylacrylat, Diethylaminoethylmethacrylat, Dimethylaminopropylacrylat, Dimethylaminopropylmethacrylat, Diethylaminopropylacrylat, Dimethylaminobutylacrylat und Diethylaminobutylacrylat. Die basischen Acrylate können in Form der freien Basen, der Salze mit Mineralsäuren wie Salzsäure, Schwefelsäure oder Salpetersäure, der Salze mit organischen Säuren wie Ameisensäure, Essigsäure, Propionsäure oder Sulfonsäure oder in quaternisierter Form eingesetzt werden. Geeignete Quaternisierungsmittel sind beispielsweise Dimethylsulfat, Diethylsulfat, Methylchlorid, Ethylchlorid oder Benzylchlorid.

Weitere geeignete Comonomere sind Amide ethylenisch ungesättigter Carbonsäuren wie Acrylamid, Methacrylamid sowie N-Alkylmono- und -Diamide von monoethylenisch ungesättigten Carbonsäuren mit Alkylresten von 1 bis 6 C-Atomen, z.B. N-Methylacrylamid, N,N-Dimethylacrylamid, N-Methylmethacrylamid, N-Ethylacrylamid, N-Propylacrylamid und tert.Butylacrylamid sowie basische (Meth)acrylamide, wie z.B. Dimethylaminoethylacrylamid, Dimethylaminoethylmethacrylamid, Diethylaminoethylacrylamid, Diethylaminoethylmethacrylamid, Dimethylaminopropylacrylamid, Diethylaminopropylacrylamid, Dimethylaminopropylmethacrylamid und Diethylaminopropylmethacrylamid.

Weiterhin sind als Comonomere geeignet N-Vinylpyrrolidon, N-Vinylcaprolactam, Acrylnitril, Methacrylnitril, N-Vinylimidazol sowie substituierte N-Vinylimidazole wie z.B. N-Vinyl-2-methylimidazol, N-Vinyl-4-methylimidazol, N-Vinyl-5-methylimidazol, N-Vinyl-2-ethylimidazol und N-Vinylimidazoline wie N-Vinylimidazolin, N-Vinyl-2-methylimidazolin und N-Vinyl-2-ethylimidazolin. N-Vinylimidazole und N-Vinylimidazoline werden außer in Form der freien Basen auch in mit Mineralsäuren oder organischen Säuren neutralisierter oder in quaternisierter Form eingesetzt, wobei die Quaternisierung vorzugsweise mit Dimethylsulfat, Diethylsulfat, Methylchlorid oder Benzylchlorid vorgenommen wird. In Frage kommen auch Diallyldialkylammoniumhalogenide wie z.B. Diallyldimethylammoniumchloride.

Außerdem kommen als Comonomere Sulfogruppen enthaltende Monomere wie beispielsweise Vinylsulfonsäure, Allylsulfonsäure, Methallylsulfonsäure, Styrolsulfonsäure, die Alkalimetall- oder Ammoniumsalze dieser Säuren oder Acrylsäure-3-sulfopropylester in Frage.

Die Vinylamineinheiten enthaltenden Copolymerisate umfassen auch solche Polymerisate, die zusätzlich mindestens ein weiteres Monomer einpolymerisiert enthalten.

Um Vinylamineinheiten enthaltende Polymerisate herzustellen, geht man vorzugsweise von Homopolymerisaten des N-Vinylformamids oder von Copolymerisaten aus, die durch Copolymerisieren von
- N-Vinylformamid mit
- Vinylformiat, Vinylacetat, Vinylpropionat, Acrylnitril oder N-Vinylpyrrolidon
und anschließende Hydrolyse der Homo- oder der Copolymerisate unter Bildung von Vinylamineinheiten aus den einpolymerisierten N-Vinylformamideinheiten erhältlich sind, wobei der Hydrolysegrad 0,1 bis 100 mol-% beträgt.

Die Hydrolyse der oben beschriebenen Polymerisate erfolgt nach bekannten Verfahren durch Einwirkung von Säuren, Basen oder Enzymen. Hierbei entstehen aus den einpolymerisierten Monomeren der oben angegebenen Formel I durch Abspaltung der Gruppierung 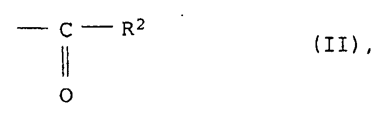 wobei R² die dafür in Formel I angegebene Bedeutung hat, Polymerisate, die Vinylamineinheiten der Formel 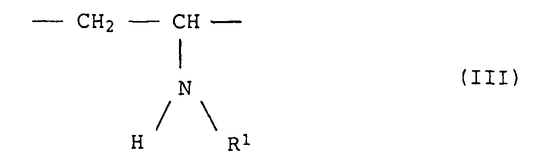 enthalten, in der R¹ die in Formel I angegebene Bedeutung hat. Die so herstellbaren Copolymerisate enthalten beispielsweise
- 99 bis 1 mol-% N-Vinylcarbonsäureamide der Formel I und
- 1 bis 99 mol-% andere, damit copolymerisierbare monoethylenisch ungesättigte Monomere
in einpolymerisierter Form.

Die Homopolymerisate der N-Vinylcarbonsäureamide der Formel I und ihre Copolymerisate können zu 0,1 bis 100, vorzugsweise 10 bis 100 mol-% hydrolysiert sein. In den meisten Fällen beträgt der Hydrolysegrad der Homo- und Copolymerisate 50 bis 90 mol-%. Der Hydrolysegrad der Homopolymerisate ist gleichbedeutend mit dem Gehalt der Polymerisate an Vinylamineinheiten. Bei Copolymerisaten, die Vinylester einpolymerisiert enthalten, kann neben der Hydrolyse der N-Vinylformamideinheiten eine Hydrolyse der Estergruppen unter Bildung von Vinylalkoholeinheiten eintreten. Dies ist insbesondere dann der Fall, wenn man die Hydrolyse der Copolymerisate in Gegenwart von Natronlauge durchführt. Einpolymerisiertes Acrylnitril wird ebenfalls bei der Hydrolyse chemisch verändert. Hierbei entstehen beispielsweise Amidgruppen oder Carboxylgruppen.

Außer den oben beschriebenen wasserlöslichen Vinylamineinheiten enthaltenden Copolymerisaten können auch wasserunlösliche Polymerisate mit Vinylamineinheiten nach dem erfindungsgemäßen Verfahren umgesetzt werden. Wasserunlösliche Vinylamineinheiten enthaltende Polymerisate sind beispielsweise durch Popcornpolymerisation von N-Vinylcarbonsäureamiden, insbesondere N-Vinylformamid, oder durch Copolymerisieren dieser Monomeren in Gegenwart von Vernetzern zugänglich. Geeignete Vernetzer sind Monomere, die mindestens zwei ethylenisch ungesättigte Doppelbindungen enthalten, beispielsweise Methylenbisacrylamid, Divinyldioxan, Divinylbenzol, Butandioldiacrylat, Diacrylate von Polyalkylenglykolen mit beispielsweise 2 bis 50 Alkylenoxideinheiten, vorzugsweise Ethylenoxideinheiten, N,N'-Divinylharnstoff und Pentaerythrittriallylether. Die Popcornpolymerisate und die vernetzten Polymerisate von N-Vinylcarbonsäureamiden werden beispielsweise durch Hydrolyse mit Basen oder Säuren in Vinylamineinheiten enthaltende Popcornpolymerisate bzw. vernetzte, Vinylamineinheiten enthaltende Copolymerisate überführt. Verfahren zur Herstellung dieser Polymerisate gehören zum Stand der Technik. Die Popcornpolymerisate sind praktisch in allen Lösemitteln unlöslich, können aber dennoch nach dem erfindungsgemäßen Verfahren modifiziert werden, ebenso wie die wasserunlöslichen, jedoch in Wasser quellbaren Vinylamineinheiten enthaltenden vernetzten Polymerisate.

Die oben beschriebenen Vinylamineinheiten enthaltenden Polymerisate und Polyethylenimine werden mit Halogenameisensäureestern umgesetzt. Vorzugsweise verwendet man Halogenameisensäureester der Formel

R ― O ― CO ― X (IV),

in der R ein organischer Rest, wie z.B. C₂- bis C₂₈-Alkyl, Phenyl, C₁- bis C₂₈-Alkylphenyl, C₄- bis C₈-Cycloalkyl, Benzyl oder C₂- bis C₂₈-Alkenyl und X = Halogen bedeutet. Der organische Rest kann gegebenenfalls funktionelle Gruppen, wie z.B. Ether-, Thioether, Estergruppen enthalten. Es können ebenfalls Di-, Tri- oder Oligohalogenameisensäureester eingesetzt werden. X steht bevorzugt für Chlor. Halogenameisensäureester sind bekannt. Die bevorzugten Chlorameisensäureester werden z.B. aus den entsprechenden Alkoholen durch Umsetzung mit Phosgen, Diphosgen oder Triphosgen gewonnen.

Die oben angegebenen Halogenameisensäureester werden mit Vinylamineinheiten enthaltenden Polymerisaten oder Polyethyleniminen bei Temperaturen oberhalb von -20°C umgesetzt. Die Reaktion wird vorzugsweise in einem Lösemittel durchgeführt. Als Lösemittel eignen sich beispielsweise C₁- bis C₄-Alkohole, Tetrahydrofuran, Dioxan, Dimethylformamid und Wasser. Vorzugsweise wird die Reaktion in wäßriger Lösung durchgeführt. Die Temperaturen bei der Umsetzung betragen beispielsweise -20 bis 200°C und liegen vorzugsweise in dem Bereich von 10 bis 100°C. Die Umsetzung wird bevorzugt in wäßriger Lösung bei pH-Werten oberhalb von 5, z.B. in dem Bereich von 8 bis 13, insbesondere 9 bis 11, durchgeführt. Die Konzentration der Reaktionspartner in der wäßrigen Lösung oder in einem anderen in Betracht kommenden Lösemittel beträgt dabei z.B. 1 bis 60, vorzugsweise 10 bis 40 Gew.-%. Die Umsetzung verläuft sehr schnell. Falls die Umsetzung in wäßriger Lösung bei Temperaturen oberhalb von 100°C vorgenommen wird, arbeitet man in druckdicht verschlossenen Apparaturen.

Als Reaktionsprodukte erhält man modifizierte Polymere, die Carbamateinheiten der Strukturen

― NH ― CO ― OR (V)

oder 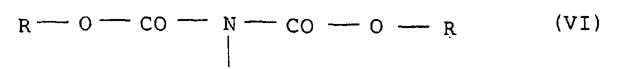 enthalten, in der R jeweils die in Formel IV angegebene Bedeutung hat. In den Formeln V und VI steht R vorzugsweise von C₁₀- bis C₂₀-Alkyl.

Die oben angegebenen Polymeren können beispielsweise mit den Halogenameisensäureestern im Gewichtsverhältnis 100000 : 1 bis 1 : 1 umgesetzt werden. Um Schutzkolloide für die Herstellung wäßriger Alkyldiketendispersionen zu erhalten, reicht bereits eine relativ geringfügige Modifizierung der in Betracht kommenden Polymeren mit Halogenameisensäureestern. So werden beispielsweise Umsetzungsprodukte, die durch Reaktion von Polyethyleniminen oder von Vinylamineinheiten enthaltenden Polymeren mit Chlorameisensäureestern im Gewichtsverhältnis 100000 : 1 bis 15 : 1 erhältlich sind, als Schutzkolloid für die Herstellung von wäßrigen Dispersionen von C₁₄- bis C₂₂-Alkylketendimeren eingesetzt. Die so erhältlichen wäßrigen Dispersionen von Alkylketendimeren haben beispielsweise Konzentrationen an Alkyldiketen von 10 bis 40, vorzugsweise 15 bis 25 Gew.-%. Solche Dispersionen haben eine relativ niedrige Viskosität und sind lagerstabil.

In den meisten Fällen beträgt der Gehalt an Carbamatgruppen der Struktur V mindestens 0,1 mol-%. Üblicherweise werden bei dem erfindungsgemäßen Verfahren mindestens 2 mol-% der NH-Gruppen der Polymeren mit Halogenameisensäureestern umgesetzt. Vorzugsweise setzt man 5 bis 10 mol-% der NH-Gruppen der in Betracht kommenden Polymeren mit Halogenameisensäureestern um. Man kann jedoch auch sämtliche NH-Gruppen der Polymeren mit Halogenameisensäureestern umsetzen, so daß man zu Polymeren gelangt, die beispielsweise 1 bis 100, vorzugsweise 1 bis 10 mol-% an Einheiten der Formel V aufweisen. Wenn man Polyvinylamine, die durch Hydrolyse von Homopolymerisaten von N-Vinylformamid hergestellt werden, bei der Umsetzung mit Halogenameisensäureestern der Formel IV einsetzt, können beide Wasserstoffatome der primären Aminogruppe substituiert werden, so daß man zu Polymeren kommt, die Einheiten der Struktur VI enthalten. Solche Einheiten liegen immer dann vor, wenn die Polymeren eine primäre Aminogruppe aufweisen. Wenn man partiell hydrolysierte N-Vinylcarbonsäureamide bei der Umsetzung von Halogenameisensäureestern einsetzt, erhält man Polymerisate, die neben Einheiten der Struktur V und gegebenenfalls der Struktur VI Einheiten von nichthydrolysierten N-Vinylcarbonsäureamiden enthalten. Wenn man beispielsweise Copolymerisate aus N-Vinylformamid und Vinylformiat, Vinylacetat oder Vinylpropionat einsetzt, erhält man in Abhängigkeit von den Hydrolysebedingungen Copolymerisate, die Vinylamin- und Vinylformamideinheiten neben Vinylformiat-, Vinylacetat- und Vinylpropionat-Einheiten sowie den Hydrolyseprodukten dieser Einheiten, nämlich Vinylalkoholeinheiten enthalten.

Besonders bevorzugt sind Polymerisate die
- Aminogruppen und Carbamatfunktionen der Formel V
- Vinylamineinheiten, N-Vinylformamideinheiten und Vinylcarbamateinheiten der Formel 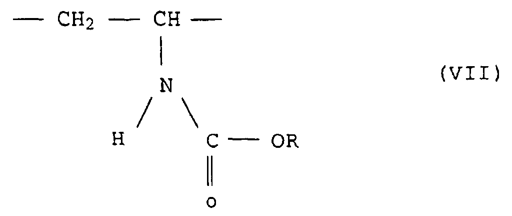
- Vinylamineinheiten, Vinylalkoholeinheiten und Einheiten der Formel VII und
- Vinylamineinheiten, Vinylestereinheiten (abgeleitet von Vinylformiat, Vinylacetat und/oder Vinylpropionat) und gegebenenfalls Vinylalkoholeinheiten und Einheiten der Formel VII enthalten.

Die Molmasse der nach dem erfindungsgemäßen Verfahren erhältlichen Carbamateinheiten enthaltenden Polymeren beträgt beispielsweise 500 bis 50 Millionen (bestimmt nach der Methode der Lichtstreuung). Die wasserlöslichen Polymeren haben beispielsweise K-Werte von 10 bis 300, vorzugsweise 30 bis 200. Die K-Werte werden nach H. Fikentscher in 5 %iger wäßriger Kochsalzlösung bei pH 7, einer Temperatur von 25°C und einer Polymerkonzentration von 0,5 Gew.-% bestimmt. Die Carbamateinheiten enthaltenden Polymeren werden als Retentions-, Entwässerungs- und Flockungsmittel sowie als Fixiermittel bei der Herstellung von Papier verwendet. Sie werden hierzu in den üblichen Mengen eingesetzt. Sie eignen sich insbesondere als Prozeßhilfsmittel bei der Entwässerung von störstoffhaltigen Papierstoffen. Störstoffe sind beispielsweise Ligninsulfonate oder andere Inhaltsstoffe des Holzes und Huminsäuren. Die erfindungsgemäß zu verwendenden Carbamateinheiten enthaltenden Polymerisate können zur Herstellung aller bekannten Papier-, Pappe- und Kartonqualitäten eingesetzt werden. Die Papiere können aus einer Vielzahl verschiedenartiger Fasermaterialien hergestellt werden, beispielsweise aus Sulfit- oder Sulfatzellstoff in gebleichtem oder in ungebleichtem Zustand, Holzschliff, Druckschliff, CTMP oder Altpapier. Die Retentions-, Entwässerungs- und Flockungsmittel werden dabei vorzugsweise in Mengen von 0,01 bis 0,1 Gew.-%, bezogen auf die trockenen Faserstoffe, angewendet. Die Carbamateinheiten enthaltenden Polymeren haben außerdem eine gute Fixierwirkung in solchen Papierstoffen, die größere Mengen an Störstoffen enthalten, z.B. weisen altpapierhaltige Stoffe störende Mengen an Harzen, polymeren Bindern und anderen störenden Feststoffen auf. Um die Störstoffe auf den Fasern oder im Papier zu fixieren, verwendet man die Carbamatgruppen enthaltenden, wasserlöslichen und wasserunlöslichen Polymeren, beispielsweise in Mengen von 0,001 bis 0,1 Gew.-%, bezogen auf trockenen Papierstoff.

Die Carbamatgruppen enthaltenden Polymerisate sind außerdem als Emulgator zur Herstellung von wäßrigen Füllstoffanschlämmungen geeignet, die beispielsweise bei der Herstellung von füllstoffhaltigen Papieren eingesetzt werden. Geeignete Füllstoffe sind beispielsweise Clay, Kreide, Titandioxid und Kaolin. Die Mengen an Emulgator zur Herstellung der Füllstoffanschlämmungen betragen beispielsweise 0,1 bis 2, vorzugsweise 0,5 bis 1,5 Gew.-%, bezogen auf die wäßrige Anschlämmung.

Die in den folgenden Beispielen angegebenen Teile sind Gewichtsteile, die Prozentangaben beziehen sich auf das Gewicht der Stoffe.

Der K-Wert der Polymerisate wurde nach H. Fikentscher, Cellulosechemie, Band 13, 58-64 und 71-74 (1932) bei einer Temperatur von 20°C in 5 %igen wäßrigen Kochsalzlösungen bei einem pH-Wert von 7 und einer Polymerkonzentration von 0,5 % bestimmt; dabei bedeutet K = k x 10³.

Der vollständige Umsatz der Reaktion mit Halogenameisensäureestern wurde IR-spektroskopisch bestätigt. So geben die Carbamatstrukturen jeweils zu zwei charakteristischen Banden bei 1680-1700 und 1540 cm⁻¹ Anlaß.

Zur anwendungstechnischen Prüfung der Produkte wurden in einem Rapid-Köthen-Laborblattbildner Blätter hergestellt. Die Trockenreißlänge wurde gemäß DIN 53112, Blatt 1 und die Naßreißlänge gemäß DIN 53112, Blatt 2, bestimmt.

### Beispiel 1

500 g einer 26 %igen Lösung eines Polyvinylamins (3018 mmol Vinylamin) mit einer Molmasse von 30000 g/mol (K-Wert 30) wurden in einem Kolben vorgelegt und unter Rühren auf eine Temperatur von 30°C erwärmt. Durch Zugabe von 70 g 38 %iger Salzsäure stellte man den pH-Wert der wäßrigen Lösung auf 9,5 ein. Unter ständigem Rühren tropfte man im Verlauf von 30 Minuten 74 g (783 mmol) Chlorameisensäuremethylester zu und hielt das Reaktionsgemisch noch weitere 30 Minuten bei dieser Temperatur. Während der Reaktion wurde der pH-Wert der Lösung durch Zusatz von 4 g 20 %iger wäßriger Natronlauge in einem Bereich von 9 bis 10 gehalten. Die Lösung wurde mit 200 g Wasser verdünnt und mit 130 g 38 %iger Salzsäure auf einen pH-Wert von 7 eingestellt. Es resultierten 978 g einer wäßrigen Polymerlösung mit einem Polymergehalt von 17,9 %. Das Polymer setzt sich aus 74 mol-% Vinylamin und 26 mol-% N-Vinyl-o-methylcarbamat zusammen.

### Beispiel 2

Wie in Beispiel 1 beschrieben, setzte man 500 g einer 26 %igen wäßrigen Polyvinylaminlösung mit 60 g Chlorameisensäure-2-ethylhexylester (293 mmol) ein. Man erhielt 964 g Polymerlösung mit einem Polymergehalt von 18,6 %. Das Polymer setzt sich aus 90 mol-% Vinylamin und 10 mol-% N-Vinyl-O-2-ethylhexylcarbamat zusammen.

### Beispiel 3

Man verfährt wie im Beispiel 1 beschrieben, setzt jedoch 12 g Chlorameisensäurecetylester (39 mmol), 2 g (20 %iger wäßriger Natronlauge und 176 g 38 %iger Salzsäure ein. Man erhielt 960 g Polymerlösung mit einem Polymergehalt von 13,4 %. Das Polymer setzt sich aus 98,7 mol-% Vinylamin und 1,3 mol-% N-Vinyl-O-cetylcarbamat zusammen.

### Beispiel 4

Beispiel 1 wurde mit den Ausnahmen wiederholt, daß man 14 g Chlorameisensäuremyristylester (51 mmol), 2 g 20 %ige wäßrige Natronlauge und 182 g 38 %ige Salzseäure einsetzt. Man erhielt 968 g Polymerlösung mit einem Polymergehalt von 14,7 %. Das Polymer setzt sich aus 98,3 mol-% Vinylamin und 1,7 mol-% N-Vinyl-O-myristylcarbamat zusammen.

### Beispiel 5

500 g einer 9 %igen wäßrigen Lösung (pH 7) eines Polyvinylamins (1045 mmol Vinylamin) mit einer Molmasse von 300000 g/mol (K-Wert 90) wurden in einem Kolben vorgelegt und unter Rühren auf eine Temperatur von 30°C erwärmt. Durch Zugabe von 85 g (20 %iger wäßriger Natronlauge stellte man den pH-Wert der wäßrigen Lösung auf 9,5 ein. Unter ständigem Rühren tropfte man 30 g Chlorameisensäuremethylester (317 mmol) zu und hielt das Reaktionsgemisch noch weitere 30 Minuten bei dieser Temperatur. Während der Reaktion wurde der pH-Wert der Lösung durch Zusatz von 2 g 20 %iger Natronlauge in einem Bereich von 9 bis 10 gehalten. Die Lösung wurde mit 200 G Wasser verdünnt und mit 125 g 38 %iger Salzsäure auf einen pH-Wert von 7 eingestellt. Man erhielt 942 g Polymerlösung mit einem Polymergehalt von 6,9 %. Das Polymer setzt sich aus 69,7 mol-% Vinylamin und 30,3 mol-% N-Vinyl-O-methylcarbamat zusammen.

### Beispiel 6

Beispiel 5 wurde mit den Ausnahmen wiederholt, daß man 13 g Chlorameisensäure-2-ethylhexylester (64 mmol) und 165 g 38 %ige Salzsäure einsetzte. Man erhielt 965 g Polymerlösung mit einem Polymergehalt von 5,8 %. Das Polymer setzt sich aus 93,9 mol-% Vinylamin und 6,1 mol-% N-Vinyl-O-2-ethylhexylcarbamat zusammen.

### Beispiel 7

Beispiel 5 wurde mit der Ausnahme wiederholt, daß man 9 g Chlorameisensäuremyristylester (33 mmol) einsetzte. Man erhielt 961 g Polymerlösung mit einem Polymergehalt von 5,5 %. Das Polymer setzt sich aus 96,8 mol-% Vinylamin und 3,2 mol-% N-Vinyl-O-myristylcarbamat zusammen.

### Beispiel 8

Beispiel 5 wurde mit der Ausnahme wiederholt, daß man anstelle von Chlorameisensäuremethylester 2 g Chlorameisensäurecetylester (6,6 mmol) einsetzte. Man erhielt 954 g Polymerlösung mit einem Polymergehalt von 4,9 %. Das Polymer setzt sich aus 99,4 mol-% Vinylamin und 0,6 mol-% N-Vinyl-O-cetylcarbamat zusammen.

### Beispiel 9

Beispiel 5 wurde mit der einzigen Ausnahme wiederholt, daß man 4 g Chlorameisensäurecetylester (13,2 mmol) einsetzte. Man erhielt 956 g Polymerlösung mit einem Polymergehalt von 5,1 %. Das Polymer setzt sich aus 98,7 mol-% Vinylamin und 1,3 mol-% N-Vinyl-O-cetylcarbamat zusammen.

### Polymer 1 (Vergleich)

Homopolymerisat aus N-Vinylformamid mit einem K-Wert von 90, aus dem 100 % der Formylgruppen durch Hydrolyse mit Natronlauge abgespalten wurden. Das Polymer liegt in 14,2 %iger wäßriger Lösung vor.

### Polymer 2 (Vergleich)

Handelsüblicher Neutralnaßverfestiger auf Basis eines Umsetzungsproduktes von Epichlorhydrin und einem Polyamidoamin aus Diethylentriamin und Adipinsäure.

### Anwendungstechnische Beispiele

In einem Rapid-Köthen-Blattbilder wurden Blätter mit einem Flächengewicht von 80 g/cm² hergestellt. Der Papierstoff bestand aus 50 % gebleichtem Laubholzsulfit- und 50 % gebleichtem Nadelholzsulfitzellstoff mit einem Mahlgrad von 34°SR (Schopper-Riegler) in 0,5 %iger wäßriger Suspension. Der pH-Wert der Stoffsuspension betrug 8,3. Die Stoffsuspension wurde in 6 gleiche Teile aufgeteilt, 5 davon wurden mit den, in der Tabelle unter b) bis f) angegebenen Polymeren versetzt.
a) Die Stoffsuspension enthielt keine weiteren Zusätze.
b) - d) Die Stoffsuspension wurde mit 0,5 %, bezogen auf trockenen Faserstoff, der Polymeren 7 bis 9 versetzt.
e) - f) Die Stoffsuspension wurde mit 0,5 %, bezogen auf trockenen Faserstoff, der Polymeren 1 und 2 versetzt.

Die Stoffsuspensionen wurden jeweils in einem Rapid-Köthen-Blattbilder entwässert. Anhand der daraus erhaltenen Blätter wurden die in der nachfolgenden Tabelle 1 angegebenen Trocken- und Naßreißlängen gemessen. Die Beispiele 10 a, e) und f) sind Vergleichsbeispiele, die Beispiele 10 b), c) und d) sind Beispiele gemäß Erfindung.

**Tabelle 1**

| Beispiel 10 | Polymer erhalten nach Beispiel | Naßreißlänge [m] | | Trockenreißlänge [m] |
|---|---|---|---|---|
| | | ungealtert | gealtert | |
| a) | - | 124 | 126 | 3406 |
| b) | 7 | 593 | 608 | 4051 |
| c) | 8 | 629 | 665 | 4059 |
| d) | 9 | 634 | 670 | 3937 |
| e) | Polymer 1 | 625 | 650 | 3668 |
| f) | Polymer 2 | 630 | 750 | 3879 |

## Patentansprüche

1. Verfahren zur Herstellung von Carbamateinheiten enthaltenden Polymerisaten, **dadurch gekennzeichnet, daß** man Polyethylenimine oder Polymerisate, die Vinylamineinheiten der Formel 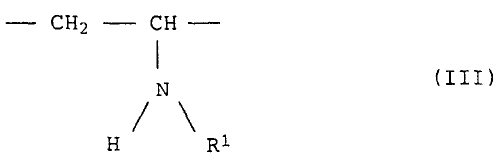 enthalten, in der R¹ = H oder C₁- bis C₆-Alkyl bedeuten, mit Halogenameisensäureestern umsetzt.

2. Verfahren nach Anspruch 1, **dadurch gekennzeichnet, daß** man Polymerisate einsetzt, die 0,1 bis 100 mol-% Vinylamineinheiten enthalten.

3. Verfahren nach Anspruch 1 oder 2, **dadurch gekennzeichnet, daß** man Polymerisate einsetzt, die 10 bis 100 mol-% Vinylamineinheiten enthalten.

4. Verfahren nach einem der Ansprüche 1 bis 3, **dadurch gekennzeichnet, daß** man Polymerisate einsetzt, die 50 bis 90 mol-% Vinylamineinheiten enthalten.

5. Verfahren nach einem der Ansprüche 1 bis 4, **dadurch gekennzeichnet, daß** man als Vinylamineinheiten enthaltende Polymerisate partiell oder vollständig hydrolysierte Homopolymerisate von N-Vinylformamid einsetzt.

6. Verfahren nach einem der Ansprüche 1 bis 4, **dadurch gekennzeichnet, daß** man partiell oder vollständig hydrolysierte Copolymerisate von N-Vinylformamid einsetzt.

7. Verfahren nach Anspruch 6, **dadurch gekennzeichnet, daß** man Copolymerisate einsetzt, die durch Copolymerisieren von
- N-Vinylformamid und
- vinylformiat, Vinylacetat, Vinylpropionat, Acrylnitril und/oder N-Vinylpyrrolidon
und anschließende Hydrolyse der Copolymerisate unter Bildung von Vinylamineinheiten aus den einpolymerisierten N-Vinylformamideinheiten erhältlich sind, wobei der Hydrolysegrad 0,1 bis 100 mol-% beträgt.

8. Verfahren nach Anspruch 1, **dadurch gekennzeichnet, daß** man Polyethylenimine mit einer Molmasse von 200 bis 500000 einsetzt.

9. Verfahren nach einem der Ansprüche 1 bis 8, **dadurch gekennzeichnet, daß** man Halogenameisensäureester der Formel 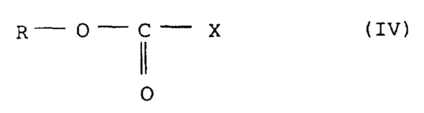 einsetzt, in der
R = C₂- bis C₂₈-Alkyl, Phenyl, C₁- bis C₂₈-Alkylphenyl, C₄bis C₈-Cycloalkyl, Benzyl oder C₂- bis C₂₈-Alkenyl und
X = Halogen ist.

10. Verfahren nach Anspruch 9, **dadurch gekennzeichnet, daß** man als Verbindung der Formel IV Chlorameisensäureester einsetzt.

11. Verfahren nach einem der Ansprüche 1 bis 10, **dadurch gekennzeichnet, daß** man die Polymeren mit den Halogenameisensäureestern im Gewichtsverhältnis 100.000 : 1 bis 1 : 1 umsetzt.

12. Verfahren nach einem der Ansprüche 1 bis 11, **dadurch gekennzeichnet, daß** man die Polymeren mit den Halogenameisensäureestern in einem solchen Verhältnis umsetzt, daß 2 bis 100 mol-% der Aminogruppen der Polyethylenimine oder der Vinylamineinheiten der Polymerisate in Vinylcarbamateinheiten umgewandelt werden.

13. Verwendung der nach den Ansprüchen 1 bis 12 erhältlichen Carbamatgruppen enthaltenden Polyethylenimine oder der Vinylcarbamateinheiten enthaltenden Polymerisate als Retentions- und Entwässerungsmittel sowie als Fixiermittel bei der Herstellung von Papier, als Schutzkolloid für die Herstellung von wäßrigen Alkyldiketendispersionen und als Dispergiermittel für die Herstellung von wäßrigen Füllstoffanschlämmungen.

14. Verwendung nach Anspruch 13, **dadurch gekennzeichnet, daß** man die Umsetzungsprodukte, die durch Reaktion von Polyethyleniminen oder von Vinylamineinheiten enthaltenden Polymeren mit Chlorameisensäureestern im Gewichtsverhältnis 100000 : 1 bis 15 : 1 erhältlich sind, als Schutzkolloid für die Herstellung von wäßrigen Dispersionen von C₁₄- bis C₂₂-Alkylketendimeren einsetzt.

## Claims

1. A process for preparing addition polymers which contain carbamate units, which comprises reacting polyethyleneimines or addition polymers which contain vinylamine units of the formula 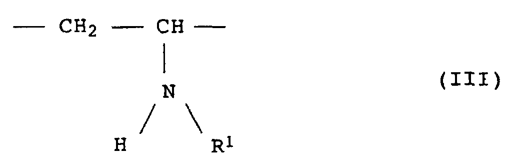 where R¹ is hydrogen or C₁-C₆-alkyl, with haloformic esters.

2. A process as claimed in claim 1, wherein addition polymers containing from 0.1 to 100 mol% of vinylamine units are used.

3. A process as claimed in claim 1 or 2, wherein addition polymers containing from 10 to 100 mol% of vinylamine units are used.

4. A process as claimed in any of claims 1 to 3, wherein addition polymers containing from 50 to 90 mol% of vinylamine units are used.

5. A process as claimed in any of claims 1 to 4, wherein the addition polymers used as containing vinylamine units are partially or completely hydrolyzed homopolymers of N-vinylformamide.

6. A process as claimed in any of claims 1 to 4, wherein partially or completely hydrolyzed copolymers of N-vinylformamide are used.

7. A process as claimed in claim 6, wherein the copolymers used are obtainable by copolymerization of
- N-vinylformamide and
- vinyl formate, vinyl acetate, vinyl propionate, acrylonitrile and/or N-vinylpyrrolidone
and subsequent hydrolysis of the copolymers to form vinylamine units from the copolymerized N-vinylformamide units, the degree of hydrolysis being within the range from 0.1 to 100 mol%.

8. A process as claimed in claim 1, wherein polyethyleneimines having a molar mass from 200 to 500,000 are used.

9. A process as claimed in any of claims 1 to 8, wherein the haloformic esters used have the formula 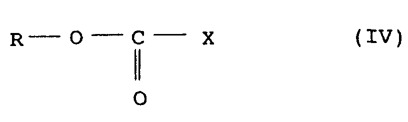 where
R = is C₂-C₂₈-alkyl, phenyl, C₁-C₂₈-alkylphenyl, C₄-C₈-cycloalkyl, benzyl or C₂-C₂₈-alkenyl, and
X = is halogen.

10. A process as claimed in claim 9, wherein a chloroformic ester is used as compound of the formula IV.

11. A process as claimed in any of claims 1 to 10, wherein the polymers are reacted with the haloformic esters in a weight ratio within the range from 100,000 : 1 to 1 : 1.

12. A process as claimed in any of claims 1 to 11, wherein the polymers are reacted with the haloformic esters in such a ratio that from 2 to 100 mol% of the amino groups of the polyethyleneimines or of the vinylamine units of the addition polymers are converted into vinylcarbamate units.

13. The use of the carbamate-functionalized polyethyleneimines or vinylamine polymers obtainable as claimed in any of claims 1 to 12 as retention and drainage aids and as fixatives in papermaking, as protective colloids for the preparation of aqueous alkyldiketene dispersions and as dispersants for the preparation of aqueous filler slurries.

14. A use as claimed in claim 13, wherefor the reaction products which are obtainable by reaction of polyethyleneimines or of polymers containing vinylamine units with chloroformic esters in a weight ratio within the range from 100,000 : 1 to 15 : 1 are used as protective colloids for the preparation of aqueous dispersions of C₁₄-C₂₂-alkylketene dimers.

## Revendications

1. Procédé de préparation de polymères contenant des unités carbamate, **caractérisé en ce que** l'on fait réagir des polyéthylène-imines ou des polymères contenant des unités vinyliques de la formule 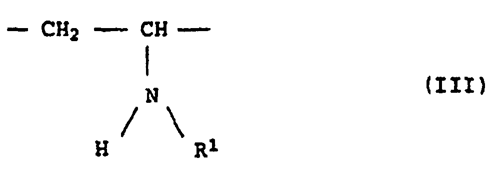 dans laquelle R¹ = H représente un radical alkyle en C₁ à C₆, avec des esters d'acides halogénoformiques.

2. Procédé selon la revendication 1, **caractérisé en ce que** l'on met en oeuvre des polymères contenant de 0,1 à 100% molaires d'unités de vinylamine.

3. Procédé selon la revendication 1 ou 2, **caractérisé en ce que** l'on met en oeuvre des polymères contenant de 10 à 100% molaire d'unités de vinylamine.

4. Procédé selon l'une des revendications 1 à 3, **caractérisé en ce que** l'on met en oeuvre des polymères contenant de 50 à 90% molaire d'unités de vinylamine.

5. Procédé selon l'une des revendications 1 à 4, **caractérisé en ce que** l'on met en oeuvre, en tant que polymères contenant des unités de vinylamine, des homopolymères de N-vinylformamide partiellement ou totalement hydrolysés.

6. Procédé selon l'une des revendications 1 à 4, **caractérisé en ce que** l'on met en oeuvre des copolymères de N-vinylformamide partiellement ou totalement hydrolysés.

7. Procédé selon la revendication 6, **caractérisé en ce que** l'on met en oeuvre des copolymères que l'on peut obtenir par copolymérisation de
- N-vinylformamide et
- formiate de vinyle, acétate de vinyle, propionate de vinyle, acrylonitrile et/ou N-vinylpyrrolidone
et hydrolyse subséquente des copolymères avec formation d'unités de vinylamine à partir des unités de N-vinylformamide copolymérisées, le degré d'hydrolyse étant de 0,1 à 100% molaires.

8. Procédé selon la revendication 1, **caractérisé en ce que** l'on met en oeuvre des polyéthylène-imines d'une masse molaire de 200 à 500000.

9. Procédé selon l'une des revendications 1 à 8, **caractérisé en ce que** l'on met en oeuvre des esters formiques halogénés de la formule 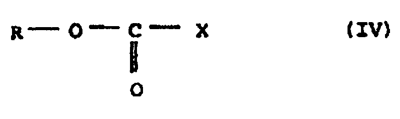 dans laquelle
R = alkyle en C₂ à C₂₈, phényle, alkylphényle en C₁ à C₂₈, cycloalkyle en C₄ à C₈, benzyle ou alcényle en C₂ à C₂₈, et
X = halogène.

10. Procédé selon la revendication 9, **caractérisé en ce que** l'on met en oeuvre en tant que composé de la formule IV un ester de l'acide chloroformique.

11. Procédé selon l'une des revendications 1 à 10, **caractérisé en ce que** l'on fait réagir les polymères avec l'ester d'acide halogénoformique en rapport pondéral de 100.000 : 1 à 1 : 1.

12. Procédé selon l'une des revendications 1 à 11, **caractérisé en ce que** l'on fait réagir les polymères avec l'ester d'acide halogénoformique en un rapport pondéral tel que de 2 à 100% molaires des groupes amino de la polyéthylène-imine ou des unités de vinylamine du polymère soient convertis en unités de vinylcarbamate.

13. Utilisation des polyéthylène-imines contenant des groupes carbamate que l'on peut obtenir selon les revendications 1 à 12 comme agents de rétention et de déshydratation ainsi que comme agents de fixation dans la fabrication du papier, comme colloïdes protecteurs dans la préparation de dispersions aqueuses d'alkyldicétènes et comme agent de dispersion dans la préparation de boues aqueuses de charges.

14. Utilisation selon la revendication 13, **caractérisée en ce que** les produits de réaction, qui peuvent être obtenus par réaction de polyéthylène-imines ou de polymères contenant des unités de vinylamine avec des esters d'acide chloroformique en rapport pondéral de 100000 : 1 à 15 : 1 sont utilisés comme colloïdes protecteurs dans la préparation de dispersions aqueuses de dimères d'alkylcétènes en C₁₄ à C₂₂.
